# EUROPÄISCHE PATENTANMELDUNG

(11) **EP 2 011 776 A2**
(43) Veröffentlichungstag der Anmeldung: **07.01.2009**
(21) Anmeldenummer: 08010583.6
(22) Anmeldetag: 11.06.2008
(51) Int. Cl.: C04B 41/64

(54) **Verfahren zur Behandlung von Estrichen**

(30) Priorität: 14.06.2007 DE 102007027988
(71) Anmelder: Knauseder, Heinz, 71364 Winnenden (DE)
(72) Erfinder: Knauseder, Heinz, 71364 Winnenden (DE)
(74) Vertreter: Mammel, Ulrike

(57) **Zusammenfassung**

Die Erfindung betrifft ein Verfahren zur Behandlung von Estrichen, wobei die Oberfläche des Estrichs zunächst geschliffen und/oder poliert wird, bis eine glänzende Oberfläche erhalten wird und diese Oberfläche anschließend mit einem Mittel behandelt wird, das Lösemittel und Silane umfasst.

## Beschreibung

Die vorliegende Erfindung betrifft ein Verfahren zur Behandlung von Estrichen, insbesondere von Magnesiaestrichen.

Estriche sind aus natürlichen Materialien hergestellt, weisen ein natürliches Erscheinungsbild auf und sind in Bezug auf den Untergrund anspruchslos. Auch können Estriche in stark variierenden Stärken verlegt werden.

Derzeit werden Magnesiaestriche überwiegend in der Industrie als klassische Nutzestriche verwendet, nur in vereinzelten Fällen werden sie als optisch höherwertige Estriche eingebaut bzw. gezielt als Designobjekt verwendet.

Üblicherweise erhalten die Magnesiaestriche entweder überhaupt keine Pflege oder sie werden relativ kurz nach der Verlegung mit einem Pflegeprodukt eingelassen. Hierbei kommen verschiedene Öle, weiche oder harte Wachse, Dispersionen oder Kombinationen aus diesen Produkten als Pflegemittel zum Einsatz.

Zur Verbesserung der Eigenschaften des Estrichs ist bekannt, die Oberfläche mit Kunstharz (Epoxyharz) zu imprägnieren oder zu versiegeln. Hierdurch kann zwar eine Wasser abweisende Oberfläche erzielt werden. Die Wasser abweisende Oberflächenschicht ist allerdings kratzempfindlich und zudem hitzeempfindlich, so dass z.B. bei starker mechanischer Beanspruchung der Oberfläche und der dadurch bewirkten Reibung ein Verbrennen der Oberfläche in Kauf genommen werden muss.

Ein Teil der Magnesiaestriche werden auch als Unterkonstruktion für andere Oberbeläge bzw. Beschichtungen eingebaut, hier entfällt die Pflege komplett.

Generell hat der Magnesiaestrich neben seinen vielen Vorteilen auch einige Nachteile, z.B. die farbliche Inhomogenität des Erscheinungsbildes des Magnesiaestrichs. Hierfür gibt es verschiedene Gründe, die Wichtigsten sind nachfolgend aufgeführt:

Die natürlichen Ausgangsprodukte des Estrichs sind nicht homogen.

Die Untergründe sind nicht homogen bezüglich ihrer Dichte, ihrer Feuchtigkeit und ihrer Temperatur.

Die Farbe ist abhängig von den Klimabedingungen bei der Verlegung und während des Austrocknens.

Die Verlegestärken schwanken.

Im Normalfall sind Magnesiaestriche nicht wasserbeständig, da sie wasserlösliche Verbindungen enthalten. Selbst wenn durch spezielle Zusätze oder Verfahren die Wasserbeständigkeit der Estriche verbessert wird, sind sie immer noch offenporig und nehmen Flüssigkeiten auf, was unter anderem zu unschöner Fleckenbildung oder auch zur Zerstörung des Magnesiaestrichs führen kann.

Auch blühen die Magnesiaestriche noch einige Zeit nach der Verlegung aus. Hierbei handelt es sich um die Bildung von Kristallen auf der Oberfläche, die meist beim Austrocknen des Magnesiaestrichs entstehen. Diese Ausblühungen werden in der Regel durch den normalen Gebrauch abgenutzt, können aber auch, wenn es sich um Ca-Verbindungen handelt, den Belag dauerhaft beeinträchtigen.

Die Aufgabe der vorliegenden Erfindung besteht darin, ein Verfahren anzugeben, durch das optisch ansprechende unempfindliche Estriche bereitgestellt werden können.

Diese Aufgabe wird erfindungsgemäß durch ein Verfahren gelöst, bei dem die Oberfläche des Estrichs zunächst geschliffen und/oder poliert wird, bis eine glänzende Oberfläche erhalten wird und diese Oberfläche anschließend mit einem Mittel behandelt wird, das Lösemittel und Silane umfasst.

Hierdurch wird eine glänzende, unempfindliche, optisch ansprechende Estrichoberfläche erhalten. Kristalle, Ausblühungen und Verschmutzungen an der Oberfläche sind nahezu verschwunden, die Farbe ist wesentlich homogener und die Oberfläche hat ein glänzendes poliertes Erscheinungsbild.

Auch sind einzelne raue Stellen, die bei Magnesiaestrich immer wieder auftreten, homogenisiert.

Zudem ist die Oberfläche versiegelt, Flüssigkeiten perlen ab (Lotuseffekt), so dass die aus dem Stand der Technik infolge des Aufsaugens von Flüssigkeiten bedingten Flecken vermieden werden.

Durch den ersten erfindungsgemäßen Verfahrensschritt des Schleifens/Polierens werden mit geeigneten Schleif- und/oder Poliergeräten Ausblühungen und andere Kristallverbindungen entfernt, partielle Rauheiten eingeebnet und der Estrich erhält generell eine feinere Oberfläche.

Das Schleifen und/oder Polieren des Magnesiaestrichs kann mit Diamantscheiben oder anderen Schleifmitteln, deren Kombination aus Schleif- und Bindemittel eine Bearbeitung von Magnesiaestrichen erlauben wie z.B. Korund oder SiC, geschliffen werden. Je nach Alter, Härte und Gesamtfläche des Estrichs können unterschiedlich große (schwere) Maschinen zum Einsatz kommen, z.B. Schleifer mit Planetgetriebe, Einscheibenmaschinen oder kleinere Handmaschinen für die Randbereiche. Es ist jedoch durchaus auch möglich, andere Maschinen einzusetzen, die eine ähnliche Wirkung haben.

Ebenso ist es auch vom Zustand des Estrichs abhängig, ob das Schleifen trocken oder nass erfolgen soll. Sollten ein oder mehrere Nassschliffe erforderlich sein, so setzt man in der Regel Wasser ein, um ein besseres Schleifergebnis zu erzielen. Es ist aber auch möglich, andere Flüssigkeiten oder wässrige Lösungen einzusetzen, sofern diese mit den anschließenden Pflegeprodukten verträglich sind.

Nach dem Schleifen bzw. Polieren hat der Estrich eine sehr glatte Oberfläche, die schon einen deutlich sichtbaren Glanz hat. Die Ausblühungen, schwerlöslichen Ca-Verbindungen und sonstigen Kristalle sowie die meisten Verunreinigungen sind verschwunden. Der Belag hat jetzt schon ein deutlich besseres Erscheinungsbild.

Ist gewünscht, dass der Magnesia-Estrich sein grundsätzliches Erscheinungsbild im Wesentlichen beibehält, so wird bei dem Schleif-/Poliervorgang von der Oberfläche eine Schicht von 0 bis 1 mm, vorzugsweise von 0,1 - 0,3 mm, abgetragen.

Wird hingegen die Erzielung besonderer optischer Effekte wie beispielsweise eines Terazzoeffektes gewünscht, so können auch größere Schichtdicken abgetragen werden, z.B. 1 - 10 mm.

Anschließend wird die geschliffene/polierte Estrichoberfläche mit dem Lösemittel und Silane umfassenden Mittel behandelt.

Der Anteil an Silanen in dem Mittel sollte zwischen 0,5 und 50 Gew.%, vorzugsweise zwischen 2 und 25 Gew.% und besonders bevorzugt zwischen 5 und 15 Gew.% betragen. Als Silane können beispielsweise Organosilane, Organohalogensilane oder Halogensilane eingesetzt werden, insbesondere Alkylsilane und deren Derivate, substituierte Alkylsilane wie beispielsweise Methylchlorsilan, Fluorsilan. Ebenfalls ist es möglich, ein Gemisch von Silanen einzusetzen, beispielsweise Fluorsilan und Alkylsilane.

In diesem Fall weist das Mittel vorzugsweise zwischen 0 und 2,5 Gew.% Fluorsilan und 5 bis 15 Gew.% Alkylsilane auf.

Selbstverständlich können auch andere bekannte Silane oder Abkömmlinge der oben genannten Silane eingesetzt werden.

Weiterhin umfasst das Mittel Lösemittel, vorzugsweise organische Lösemittel in einem Anteil von bis zu 90 Gew.%. Als Lösemittel können beispielsweise Kohlenwasserstoffe, Alkohole oder Ester eingesetzt werden.

Als Kohlenwasserstoffe können insbesondere Paraffingemische eingesetzt werden, vorzugsweise Isoparaffingemische. Die Kohlenwasserstoffgemische können auch gelöste Wachse enthalten.

Weiterhin können als Lösemittel Alkohole, beispielsweise Methanol, Ethanol, Propanol, Isopropanol etc. eingesetzt werden, wobei der Gehalt an längerkettigen Alkoholen in dem Mittel höher als der Anteil an kurzkettigen Alkoholen liegen kann, beispielsweise bei Methanol von bis zu 10 Gew.% und bei Isopropanol bei zu 30 Gew.%.

Selbstverständlich kann das Mittel auch noch weitere Bestandteile enthalten, z.B. Komplexbildner oder Farbstoffe.

Das Mittel wird vorzugsweise gleichmäßig aufgetragen, vorzugsweise mit einem Verbrauch von 0 -300 ml/qm, insbesondere von ca. 50 ml/qm.

Das Auftragen erfolgt je nach Saugfähigkeit des Untergrundes am effektivsten mit Sprüh- oder Wischverfahren.

Beim Sprühverfahren wird die Lösung auf den Magnesiaestrich aufgesprüht und muss nur bei Bedarf nachgewischt werden. Hier kann durch den Einsatz von Druckluftsprühern eine gute Flächenleistung erzielt werden.

Beim Wischverfahren wird die Lösung mit einem Wischmob (Mob, Lumpen, Leder, Fell oder Kunstfaser) gleichmäßig auf den Untergrund aufgetragen. Dieses Verfahren ist besonders bei kleinen Flächen oder engen Räumen effektiv.

Generell kann bei Bedarf jedoch auch jedes andere Verfahren, welches einen gleichmäßigen Auftrag der Lösung erlaubt, angewandt werden.

Im Allgemeinen reicht ein einmaliger Auftrag des Silane und Lösemittel umfassenden Mittels aus; falls gewünscht kann der Auftrag jedoch auch wiederholt werden.

Generell sollte der Belag vor dem Auftragen des Pflegemittels abgetrocknet sein, sofern er zuvor nass geschliffen wurde. Je nach Klimabedingungen ist ein Abtrocknen nach 1 bis 3 Stunden erfolgt.

In einer weiteren Ausführungsform wird der mit der geschliffenen/polierten und anschließend mit dem Silane und Lösemittel umfassenden Mittel behandelte Estrich anschließend mit einem weiteren Mittel (Nachbehandlungsmittel) behandelt. Dieses Mittel kann Tenside und/oder Komplexbildner und/oder Alkohole umfassen und ist vorzugsweise eine wässrige Lösung.

Als Tenside können Seifen, anionische, nichtionische, kationische oder amphotere Tenside eingesetzt werden. Als Seifen sind insbesondere die Salze der längerkettigen Carbonsäuren wie Natriumstearat geeignet.

Weiterhin kann dieses Nachbehandlungsmittel Komplexbildner umfassen, beispielsweise Salze der Nitrilotriessigsäure, EDTA etc., vorzugsweise in einem Anteil von bis zu 10 Gew.%. Die Komplexbildner dienen dazu, die Bildung von Kalkausblühungen zu vermeiden.

Das Nachbehandlungsmittel wird auf den Boden aufgebracht und vorzugsweise in den Boden einmassiert. Dies kann mit einer Einscheibenmaschine mit Bürstenaufsatz oder Pad erfolgen.

Anschließend wird der Boden je nach Bedarf 1 - 3mal mit klarem Wasser nachgespült und ist dann nach einer Trocknungszeit, die wiederum je nach den klimatischen Bedingungen 1- 4 Stunden dauern kann, einsetzbereit.

Durch die erfindungsgemäße Behandlung der Estriche werden optisch ansprechende, glänzende, unempfindliche Oberflächen erhalten, so dass mit den erfindungsgemäß behandelten Estrichen völlig neue Einsatz- und Anwendungsgebiete für Estriche eröffnet werden, insbesondere, da Estriche in den Material und Verlegekosten kostengünstig sind und aus natürlichen Materialien hergestellt werden.

Der erfindungsgemäß behandelte Estrich ist kratzunempfindlich und der aus den bekannten Wasser abstoßenden Beschichtungsmaterialien bekannte unerwünschte Weißbruch wird vermieden. Weiterhin bleibt die Oberflächenhärte des Estrichs erhalten oder wird sogar geringfügig verbessert.

Kristalle und Verschmutzungen an der Oberfläche sind nahezu verschwunden, die Farbe ist wesentlich homogener und farbvertieft. Auch ist die Oberfläche versiegelt, lässt Flüssigkeiten abperlen (Lotuseffekt) und vereinzelte raue Stellen, die bei einem Magnesiaestrich immer wieder vorkommen, sind weitestgehend homogenisiert.

Ein weiterer wesentlicher Vorteil diese Verfahrens ist, dass es nicht nur bei Neubelägen geeignet ist sondern auch eingesetzt werden kann, um alte Beläge zu sanieren, ohne diese durch neue ersetzen zu müssen.

Die Erfindung wird nachfolgend anhand eines Aufführungsbeispiels näher beschrieben:

Eine Industriehalle mit 600 qm hat einen neu verlegten Magnesiaestrich. Dieser wird nach einer Trocknungszeit von 14 Tagen zuerst durch kehren und absaugen von groben Verunreinigungen gesäubert. Nun wird mit einer Planetschleifmaschine zuerst mit einem Diamantschleifmittel der Körnung 220 ein Schleifgang im Nassschleifverfahren gemacht. Hierbei wird darauf geachtet, dass der Schleifschlamm rasch mit Wassersaugern aufgenommen wird. Die Ränder werden mit einem Winkelschleifer mit einem Diamantschleifmittel der Körnung 220 im Nassschleifverfahren geschliffen. Nachdem der Magnesiaestrich abgetrocknet ist wird mit denselben Maschinen ein weiterer Schleifgang mit einem Diamantwerkzeug der Körnung 400 im Trockenschleifverfahren durchgeführt. Während der beiden Schleifgänge wird das Ergebnis laufend visuell kontrolliert und gegebenenfalls partiell nachgeschliffen.

Anschließend wird die Fläche mit einem Trockensauger abgesaugt. Nun wird mit einer handelsüblichen Baumspritze ca. 50 gr/qm eines Mittels umfassend ein Gemisch von wenigstens 50 Gew.% isoparaffinische Kohlenwasserstoffen, 5 - 15 Gew.% Isopropanol, 5 - 15 Gew.% Alkylsilanen, zwischen 0 und 2,5 Gew.% Fluorsilianen und zwischen 0 und 0,5 Gew.% Methanol und zwischen 0 und 2,5 Gew.% n-Butylacetat aufgetragen. Anschließend wird von einer zweiten Person, die die Fläche mit Nagelschuhen betritt, die Lösung mit einem Wischmob nochmals gleichmäßig verteilt. Am nächsten Tag wird eine wässrige Lösung, die eine Kombination von Seifen, weniger als 5 Gew.% Alkohole und ca. 5 Gew.% Natriumtrinitriloacetat (Komplexbildner) und wahlweise Duft-Hilfs- und Farbstoffe, mit dem Eimer auf der Fläche verteilt und mit einer Einscheibenmaschine und einem Bürstenaufsatz D=400mm einmassiert. Nach einer Trocknungszeit von 2 Stunden wird die gesamte Fläche 2mal mit einem Reinigungsautomat mit klarem Wasser abgefahren und ist dann zur Benutzung fertig.

## Patentansprüche

1. Verfahren zur Behandlung von Estrichen, **dadurch gekennzeichnet, dass** die Oberfläche des Estrichs zunächst geschliffen und/oder poliert wird, bis eine glänzende Oberfläche erhalten wird und diese Oberfläche anschließend mit einem Mittel behandelt wird, das Lösemittel und Silane umfasst.

2. Verfahren nach Anspruch 1, **dadurch gekennzeichnet, dass** das Schleifen und/oder Polieren des Magnesiaestrichs kann mit Diamantscheiben oder SiC- oder Korundhaltigen Schleifmitteln oder mit Schleifmitteln, deren Kombination aus Schleif- und Bindemittel eine Bearbeitung von Magnesiaestrichen erlauben, erfolgt.

3. Verfahren nach einem der vorangegangenen Ansprüche, **dadurch gekennzeichnet, dass** das Schleifen und/oder Polieren mit Schleifern mit Planetgetriebe, Einscheibenmaschinen oder kleineren Handmaschinen nass oder trocken erfolgt.

4. Verfahren nach einem der vorangegangenen Ansprüche, **dadurch gekennzeichnet, dass** bei dem Schleif-/Poliervorgang von der Oberfläche eine Schicht von 0 bis 1 mm, vorzugsweise von 0,1 - 0,3 mm, abgetragen wird.

5. Verfahren nach einem der vorangegangenen Ansprüche, **dadurch gekennzeichnet, dass** das Behandlungsmittel zwischen 0,5 und 50 Gew.%, vorzugsweise zwischen 2 und 25 Gew.% und besonders bevorzugt zwischen 5 und 15 Gew.% Silane umfasst.

6. Verfahren nach einem der vorangegangenen Ansprüche, **dadurch gekennzeichnet, dass** die Silane aus der Gruppe der Organosilane, Organohalogensilane oder Halogensilane, insbesondere der Alkylsilane und deren Derivate, substituierte Alkylsilane ausgewählt werden.

7. Verfahren nach einem der vorangegangenen Ansprüche, **dadurch gekennzeichnet, dass** das Mittel zwischen 0 und 2,5 Gew.% Fluorsilan und 5 bis 15 Gew.% Alkylsilane aufweist.

8. Verfahren nach einem der vorangegangenen Ansprüche, **dadurch gekennzeichnet, dass** das Mittel organische Lösemittel in einem Anteil von bis zu 90 Gew.%, insbesondere aus der Gruppe der Kohlenwasserstoffe, Alkohole oder Ester, umfasst.

9. Verfahren nach einem der vorangegangenen Ansprüche, **dadurch gekennzeichnet, dass** die Kohlenwasserstoffe ein Paraffingemisch sind.

10. Verfahren nach einem der vorangegangenen Ansprüche, **dadurch gekennzeichnet, dass** die Oberfläche anschließend mit einem Mittel, das Tenside und/oder Komplexbildner und/oder Alkohole und/oder Wasser umfasst, behandelt wird.

11. Verfahren nach einem der vorangegangenen Ansprüche, **dadurch gekennzeichnet, dass** die Estrichoberfläche nach der Behandlung wasserabweisend, glänzend und kratzfest ist.
